# EUROPÄISCHE PATENTSCHRIFT

(11) **EP 0 423 549 B1**
(45) Veröffentlichungstag und Bekanntmachung des Hinweises auf die Patenterteilung: **21.12.1994**
(21) Anmeldenummer: 90119032.2
(22) Anmeldetag: 04.10.1990
(51) Int. Cl.: B29C 61/06, H02G 15/18

(54) **Wärmeschrumpfbare Umhüllung mit verbesserter Einreissfestigkeit**
Heat-shrinkable covering with improved edge bear resistance
Couverture thermorétractable à résistance à la déchirure du bord améliorée

(30) Priorität: 20.10.1989 DE 3935046
(43) Veröffentlichungstag der Anmeldung: 24.04.1991
(73) Patentinhaber: RXS Schrumpftechnik-Garnituren GmbH, D-58093 Hagen (DE)
(72) Erfinder: Brudermann, Uwe, Dr., D-2305 Heikendorf (DE); Heier, Manfred, D-5804 Herdecke (DE); Meltsch, Hans-Jürgen, D-5840 Schwerte (DE)
(74) Vertreter: Fuchs, Franz-Josef, Dr.-Ing.

(56) Entgegenhaltungen:
- EP-A- 0 084 360
- EP-A- 0 115 048
- EP-A- 0 266 289
- EP-A- 0 285 444
- EP-A- 0 299 439
- EP-A- 0 364 924
- DE-A- 3 202 547
- GB-A- 2 135 239
- US-A- 3 984 005
- US-A- 4 863 768

## Beschreibung

Die Erfindung betrifft eine wärmeschrumpfbare Umhüllung aus vernetztem Kunststoffmaterial für einen dichten Abschluß von Gegenständen, wobei zumindest zwei polymere Kunststoffkomponenten über die gesamte Fläche der Umhüllung hinweg übereinanderliegend angeordnet sind und die voneinander verschiedene Schrumpffähigkeiten aufweisen.

Aus der DE-OS 19 25 739 sind unterschiedliche vernetzte Formteile und ein Verfahren zu ihrer Herstellung bekannt. Diese Formteile bestehen aus einem ersten Teil aus einem vernetzten, unschmelzbarem Polymermaterial und aus einem zweiten Teil aus einem schmelzbaren, im wesentlichen unvernetzten Polymermaterial. Dazwischen ist eine Sperrschicht eingelegt. Derartige Formteile sind beispielsweise als Rohre ausgeformt und bilden ein wärmeschrumpfbares Gebilde mit einem äußeren wärmeschrumpfenden Teil und einem zweiten, schmelzbaren, der Abdichtung dienenden, inneren Teil. Bei Verletzungen des wärmeschrumpfenden Teiles, beispielsweise entlang einer Kante, kann beim Schrumpfvorgang infolge der wirkenden Schrumpfkräfte ein Ein- und Weiterreißen erfolgen, das bis zur Unbrauchbarkeit führen kann. Die darunter liegende, schmelzende Schicht kann hierfür keine Abhilfe schaffen, da durch das Schmelzen des Materials nicht mehr die nötige Festigkeit gegeben ist. Dieses Ein- und Weiterreißen tritt bevorzugt quer zur Schrumpfrichtung ein.

In der britischen Patentschrift GB-A-2 135 239 wird eine bilateral gereckte und schrumpfbare Blasfolie für Verpackungszwecke beschrieben, die aus mehreren Schichten aus Kunststoffmaterial besteht. Die Reck- und Schrumpfprozesse finden bei Temperaturen unterhalb des Schmelzpunktes der verwendeten Materialien statt. Daraus resultiert, daß eine derartige Folie für die hohen Beanspruchungen, die beim Einsatz von Manschetten und Rohren bei hohen Temperaturen gefordert sind, nicht geeignet sind.

Aus der deutschen Offenlegungsschrift DE-A-32 02 547 ist bekannt, daß die Herstellung von wärmeschrumpfbaren Gegenständen aus einer vernetzten Kunststoffzusammensetzung durch aufeinanderfolgendes Erwärmen, Strecken und Abkühlen erfolgt.

Der vorliegenden Erfindung liegt nun die Aufgabe zugrunde, eine wärmeschrumpfende Umhüllung zu schaffen, die genügend Widerstand gegenüber mechanischen Beschädigungen, insbesondere gegen Ein- bzw. Weiterreißen, aufweist. Die gestellte Aufgabe wird nun gemäß der Erfindung mit einer wärmeschrumpfenden Umhüllung der eingangs erläuterten Art dadurch gelöst, daß die Umhüllung in Extrusionsrichtung verlaufende Wülste aufweist und daß eine Kunststoffkomponente mit optimaler Schrumpffähigkeit zwischen den Wülsten so angeordnet ist, daß die Schrumpfrichtung senkrecht zur Extrusionsrichtung verläuft, daß die Kunststoffkomponente mit optimaler Festigkeit gegen Weiterreißen, Durchstoß-, Berst- und Querfestigkeit plan ausgebildet ist, daß die polymeren Kunststoffkomponenten gleiche Grundkonzeption aufweisen, daß die Kunststoffkomponenten mit verschieden dosierten Vernetzungsbeschleunigern versehen und coextrudiert einer Elektronenbestrahlung unterzogen sind.

Für die Herstellung von wärmeschrumpfenden Artikeln, zum Beispiel Manschetten oder Rohren, wird durch den strukturellen Aufbau sowie durch Verfahren zu deren Herstellung gegenüber dem derzeitigen Stand der Technik eine deutlich verringerte Weiter- und Einreißanfälligkeit gewährleistet. Verletzungen der Oberfläche durch Einkerbungen, Einschnitte, Berührungen der erhitzten Oberfläche zum Beispiel mit einem für den Wärmeschrumpf notwendigen Propangasbrenner und dergleichen führten bei herkömmlichen wärmeschrumpfenden Artikeln zu Zerstörungen durch Weiterreißen. Die vorliegende Erfindung beruht nun darauf, daß das Weiterreißen durch mindestens eine plan ausgebildete, über die gesamte Fläche sich erstreckende Schicht mit optimaler mechanischer Festigkeit verhindert wird. Die Kunststoffkomponente für diese Schicht muß dabei so beschaffen sein, daß sie einerseits genügend Festigkeit gegen Weiterreißen sowie Durchstoß-, Berst- und Querfestigkeit aufweist, andererseits aber die Schrumpffähigkeit der ersten Kunststoffkomponente nicht unzulässig behindert.

Stark vernetzte Kunststoffkomponenten besitzen im geweiteten Zustand die zum Schrumpfen erforderlichen hohen Rückschrumpfkräfte; sie sind jedoch naturgemäß rißgefährdet, wenn sie beim Schrumpfprozeß am Rückschrumpfen behindert werden. Kunststoffkomponenten mit geringerer Vernetzung besitzen wohl auch geringe Schrumpfkräfte und unterstützen kaum den Schrumpfprozeß, doch sind sie bedeutend beständiger gegen ein Weiterreißen quer zur Schrumpfrichtung. Dadurch wird ein durch Verletzung oder Einschnitt beginnender Riß aufgehalten.

Eine einfache Herstellungsweise ergibt sich durch Coextrusion dieser unterschiedlichen Kunststoffkomponenten in schichtenweisem Sandwichaufbau. Doch kommt es dabei weniger auf die Herstellungsmethode an, sondern mehr auf die Sicherstellung des Zusammenhaftens der einzelnen Schichten in den Berührungsebenen. Die anschließende Vernetzung kann durch Elektronenbestrahlung mit entsprechend hoher Dotierung von Vernetzungsverstärkern in der zum Schrumpfen bestimmten Kunststoffkomponente zum Beispiel durch Beigabe von Triallylcyanurat (TAC), Triallylisocyanurat (TAIC), Ethylenglykolmethylacrylat (EDMA) und dergleichen, den Erfordernissen entsprechend gesteuert werden.

Weiterhin können in entsprechenden Kombinationen auch zusätzliche mechanische Verstärkungen in oder zwischen den einzelnen Schichten den Einsatzbereich erweitern. So kann beispielsweise auch eine Metallfolie, zum Beispiel aus Aluminium aufgebracht werden, wobei durch geeignete Maßnahmen, zum Beispiel mit Hilfe einer schmelzbaren Kunststoffschicht, gewährleistet wird, daß die Schrumpfung nicht beeinträchtigt wird.

Die Erfindung wird nun anhand von drei Figuren näher erläutert.
- Figur 1: zeigt eine wärmeschrumpfende Fläche in Sandwichbauweise.
- Figur 2: zeigt eine wärmeschrumpfbare Fläche gemäß der Erfindung mit eingelagerten Verstärkungselementen in Form von Fasern.
- Figur 3: zeigt eine wärmeschrumpfbare Fläche gemäß der Erfindung mit einer Einlage aus einer Polymerschaumfolie.

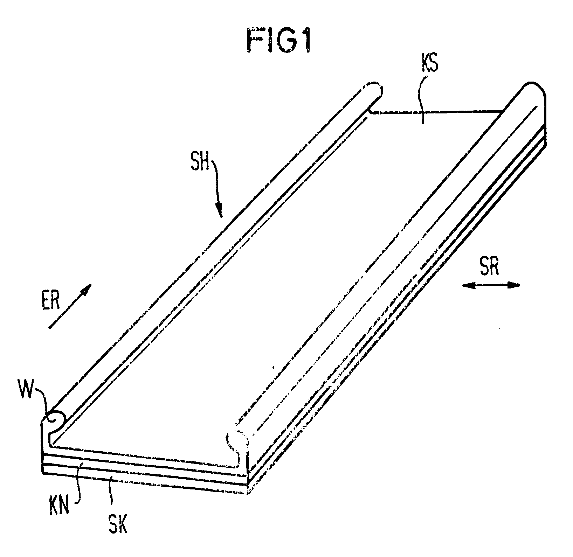

In Figur 1 wird eine schrumpfbare Umhüllung SH gezeigt, bei der gemäß der Erfindung die Einreiß- und Weiterreißanfälligkeit erheblich gemindert ist. Diese Umhüllung SH ist in Sandwichbauweise hergestellt, die zum Beispiel auf ihrer Außenseite aus einer nach dem vorausgegangenen Recken schrumpfbaren Kunststoffkomponente KS aus vernetztem Polymermaterial und einer darunter liegenden zweiten nicht schrumpfbaren oder auch ebenfalls schrumpfbaren Kunststoffkomponente KN aus Polymermaterial mit gleichem Vernetzungsgrad. Diese zweite Komponente ist in erster Linie für die verbesserte mechanische Festigkeit bestimmt. Beide Polymermaterialien sind in der Grundkonzeption jedoch gleich oder zumindest gegeneinander so verträglich, daß zwischen ihnen eine gute Haftung zustande kommt. Beide Schichten aus den Polymermaterialien sind jedoch bei Schrumpftemperatur nicht schmelzbar, wobei die Schrumpfwirkung in erster Linie nur von einer vernetzten Kunststoffkomponente KS herrührt, obwohl für die Einprägung des Formgedächtnisses alle Kunststoffschichten miteinander gedehnt werden. Die erfinderische Wirkung beruht eben auf dem verschiedenartigen Verhalten der Polymerfolien während des Schrumpfvorganges. Für die Abdichtung zum umhüllten Gegenstand hin kann zusätzlich eine schmelzende Schicht, zum Beispiel aus einem an sich bekannten Schmelzkleber SK, auf der nach innen weisenden Seite aufgetragen sein. Die Herstellung einer solchen Umhüllung bzw. später schrumpfbaren Fläche erfolgt vorzugsweise durch Extrusion wobei die Extrusionsrichtung ER in diesem Fall zweckmäßigerweise so gelegt ist, daß entlang der beiden Längsränder entsprechende Wülste W mit angeformt werden können, die zum Beispiel als Verschlußelemente zusammen mit einer diese Wülste W umfassenden Schienenklammer verwendet werden. Die Dehnungsrichtung und damit auch die Schrumpfrichtung SR ist senkrecht zu Extrusionsrichtung ER gewählt, so daß die Umhüllung SH auf den umfaßten Gegenstand aufgeschrumpft werden kann. Wenn bei dieser Umhüllung SH eine Verletzung der Oberfläche erfolgt, wird das Einreißen oder auch Weiterreißen durch die zweite, nahezu schrumpfkraftfreie Schicht verhindert.

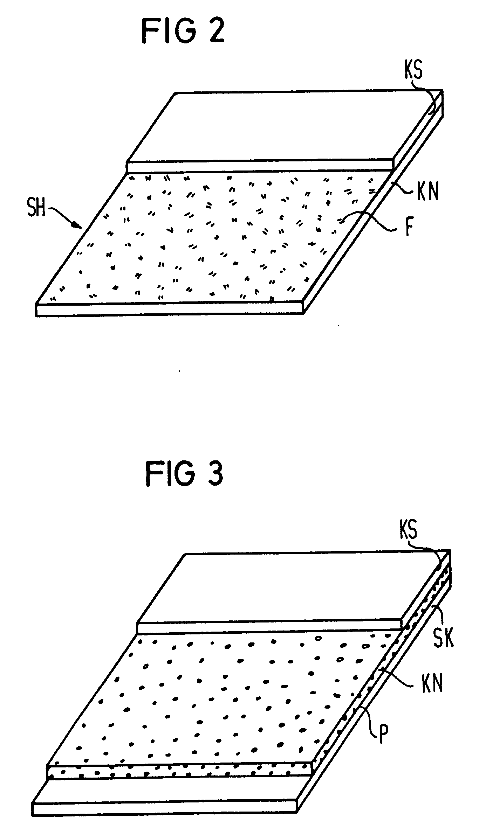

Die Figur 2 zeigt ein Beispiel für eine schrumpfbare Umhüllung SH aus verschiedenen Kunststoffkomponenten aus Polymeren, in denen Fasern F zum Beispiel ebenfalls aus Polymeren oder aus polymerverträglichen Werkstoffen eingelagert sind. Die Fasern F wirken hier entweder einzeln oder zusammen mit den anderen Schichten als das Weiterreißen verhindernde Bereiche und bewirken zudem zusätzlich eine mechanische Verstärkung des warmeschrumpfenden Artikels. Es können beispielsweise hier auch Gewebe oder Gewirke aus deartigen Fasern F eingelagert werden, wobei die Gewebe bzw. Gewirke feste oder lose Knotenpunkte aufweisen können. Die Fasern F für sich alleine wie auch im Verbund des Gewebes oder Gewirkes können selbst auch bei Wärmezufuhr schrumpfende Eigenschaften aufweisen, so daß insgesamt zusätzlich eine Schrumpfverstärkung zustande kommt. Die Fasern selbst sind in einem solchen Fall ebenfalls vernetzt und anschließend bei den geeigneten Verhältnissen gedehnt und somit mit einem Formgedächtnis versehen.

Die Figur 3 verdeutlicht ein Ausführungsbeispiel gemäß der Erfindung, bei dem eine vernetzte wärmeschrumpfbare Kunststoffkomponente KS als Polymerfolie, insbesondere aus Polyethylen in Sandwichaufbauweise zusammen mit den übrigen Schichten aus anderen vernetzten Polymermaterialien verwendet ist. Das Verhindern des Weiterreißens wird dann optimal erfüllt, wenn die niedrig vernetzte Schicht KN zusätzlich Poren P enthält, die gleichmäßig verteilt sind und wenn das Porenvolumen nicht mehr als 30% des Polymeren beträgt. Die Poren P bilden dabei Bereiche zusätzlicher Behinderung des Weiterreißens. Zusätzlich können weitere Schichten angeordnet sein, wie zum Beispiel eine Schmelzkleberschicht mit oder ohne Aluminiumfolie.

Ganz allgemein liegt der Gedanke gemäß der Erfindung darin, daß verschiedene polymere Kunststoffkomponenten mit gleichem Vernetzungsgrad, jedoch mit voneinander verschiedenen Eigenschaften, insbesondere verschiedener Schrumpffähigkeit und verschiedener mechanischer Festigkeit. Die Kunststoffkomponenten KS mit ausgeprägten Schrumpfeigenschaften bewirken die notwendige Wärmeverformung, während die Kunststoffkomponenten KN kaum schrumpffähig sind, das Schrumpfen möglichst nicht behindern, jedoch die gewünschte mechanische Festigkeit aufweisen.

Bevorzugte Polymermassen enthalten als wesentliche Bestandteile:
a) ein teilkristallines Polyolefin, zum Beispiel Polyethylen hoher Dichte (HDPF), Polyethylen niederer Dichte (LDPE), lineares Ethylencopolymer (LLDPE, LMDPE) in einem Anteil von 60% - 95%, statt eines einzelnen teilkristallinen Polyolefins kann auch eine Abmischung zum Beispiel verschiedener Polyethylene in beliebiger Zusammensetzung verwendet werden,
b) gegebenenfalls Ethylencopolymere mit Comonomeren polaren Charakters, zum Beispiel Vinylacetat, Butylacrylat in Anteilen von 5 - 30 %.
c) Füllstoffe, insbesondere Ruß in Anteilen von 1 - 25%. Zusätzlich enthalten diese Polymermassen Alterungsschutzmittel, insbesondere Antioxidantien aus der Gruppe bekannter sterisch gehinderter Phenole und Amine; gegebenenfalls Verarbeitungshilfsmittel und Vernetzungsverstärker in un terschiedlicher Dotierung.

Bei der plan übereinander liegenden Anordnung der einzelnen Kunststoffkomponenten KS, KN kann zum Beispiel auch die Schichtdicke der zweiten Kunststoffkomponente KN, die in erster Linie für die Festigkeit bestimmt ist, unterschiedlich sein, so daß auf diese Weise durch diese Materialstärkenübergänge zusätzlicher mechanischer Widerstand gebildet wird. Solche Übergänge können auch noch wechselnde geometrische Formenwahl den mechanischen Erfordernissen entsprechend optimal gestaltet werden. Eine auf solche Weise entstandene Profilstruktur sollte dann zweckmäßigerweise längs zur Schrumpfrichtung verlaufen. so ergibt sich beispielsweise ein Querschnitt mit unterschiedlichem Dickenprofil.

Weiterhin kann die zweite Kunststoffkomponente schrumpfbar oder auch nicht schrumpfbar sein. Im ersten Fall sind dann unterschiedliche Schrumpfkräfte wirksam.

Bei der Herstellung der Umhüllung können als Ausgangsprodukte auch Kunststoffkomponenten als Folien dienen, die dann in Sandwichart fest haftend übereinander gebracht werden. Dabei können die Ausgangsvernetzungsgrade der Folien auch verschieden sein.

Zusätzlich bietet sich bei den Umhüllungen gemäß der Erfindung auch die Möglichkeit an, Flächen mit alternierend oder auch nur bereichsweise wechselnder Schrumpffähigkeit herzustellen, was in einfacher Weise entweder durch wechselnde Bestrahlung bei der Strahlenvernetzung und/oder mit entsprechenden Zusätzen von chemischen Vernetzungsmitteln wie zum Beispiel Triallylcyanurat, Triallylisocyanurat oder Ethylenglycoldimethacrylat, erreicht werden kann.

Bei mehrschichtigem Aufbau einer erfindunsgemäßen Umhüllung zum Beispiel mit mehreren schrumpfbaren Schichten und einer weniger oder nicht schrumpfbaren Schicht ist es zweckmäßig, die dazwischenliegende Schicht mit Löchern, Schlitzen oder Durchrissen gleich welcher Form, zu versehen. Auf diese Weise wird ein materieller Durchgriff der gleichartigen Komponenten sichergestellt, was zu einer verbesserten gegenseitigen Haftung beiträgt.

## Patentansprüche

1. Wärmeschrumpfbare Umhüllung (SH) aus vernetztem Kunststoffmaterial für einen dichten Abschluß von Gegenständen, wobei zumindest zwei polymere Kunststoffkomponenten (KS, KN) über die gesamte Fläche der Umhüllung (SH) hinweg übereinanderliegend angeordnet sind und die voneinander verschiedene Schrumpffähigkeiten aufweisen,
**dadurch gekennzeichnet,**
daß die Umhüllung (SH) in Extrusionsrichtung (ER) verlaufende Wülste (W) aufweist und daß eine Kunststoffkomponente mit optimaler Schrumpffähigkeit zwischen den Wülsten (W) so angeordnet ist, daß die Schrumpfrichtung (SR) senkrecht zur Extrusionsrichtung (ER) verläuft, daß die Kunststoffkomponente mit optimaler Festigkeit gegen Weiterreißen, Durchstoß-, Berst- und Querfestigkeit plan ausgebildet ist, daß die polymeren Kunststoffkomponenten (KS, KN) gleiche Grundkonzeption aufweisen, daß die Kunststoffkomponenten (KS, KN)mit verschieden dosierten Vernetzungsbeschleunigern versehen und coextrudiert einer Elektronenbestrahlung unterzogen sind.

2. Wärmeschrumpfbare Umhüllung nach Anspruch 1, **dadurch gekennzeichnet,** daß die Schicht mit der optimalen mechanischen Festigkeit mit unterschiedlicher Schichtdicke ausgebildet ist.

3. Wärmeschrumpfbare Umhüllung nach Anspruch 1, **dadurch gekennzeichnet,** daß die Kunststoffmaterialien als Vernetzungsbeschleuniger vorzugsweise Triallylcyanurat, Triallylisocyanurat, Ehtylenglycoldimethacrylat aufweisen.

4. Wärmeschrumpfbare Umhüllung nach einem der vorhergehenden Ansprüche, **dadurch gekennzeichnet,** daß verschieden stark schrumpfende Bereiche durch eine wechselnde geometrische Formenwahl, vorzugsweise durch verschiedene Wahl der Materialstärke, gebildet sind.

5. Wärmeschrumpfbare Umhüllung nach Anspruch 4, **dadurch gekennzeichnet,** daß die Umhüllungsfläche eine längs zur Schrumpfrichtung verlaufende Profilstruktur aufweist.

6. Wärmeschrumpfbare Umhüllung nach einem der vorhergehenden Ansprüche, **dadurch gekennzeichnet,** daß Kunststoffkomponenten verschiedener Ausgangsvernetzungsgrade als Folien in Sandwichart übereinander liegend angeordnet sind.

7. Wärmeschrumpfbare Umhüllung nach einem der vorhergehenden Ansprüche, **dadurch gekennzeichnet,** daß die Umhüllung in Kombination von Sandwichbauweise mit Flächen alternierend wechselnder Schrumpfbereiche aufgebaut ist.

8. Wärmeschrumpfbare Umhüllung nach einem der vorhergehenden Ansprüche, **dadurch gekennzeichnet,** daß Zusatzfolien, vorzugsweise aus High-Density-Polyethylen (HDPE) oder aus Low-Density-Polyethylen (LDPE) auf die Umhüllung aufgebracht sind und daß diese gegebenenfalls schwach vernetzt sind.

9. Wärmeschrumpfbare Umhüllung nach einem der vorhergehenden Ansprüche, **dadurch gekennzeichnet,** daß Fasern aus polymerverträglichen Stoffen, vorzugsweise Glasfasern, eingelagert sind.

10. Wärmeschrumpfbare Umhüllung nach einem der vorhergehenden Ansprüche, **dadurch gekennzeichnet,** daß eine wärmeschrumpfbare Polymerschaumfolie, vorzugsweise aus Polyethylen, in die Umhüllung eingebracht ist.

11. Wärmeschrumfpbare Umhüllung nach Anspruch 10, **dadurch gekennzeichnet,** daß die Poren der Polymerschaumfolie gleichmäßig verteilt und das Porenvolumen nicht mehr als 30% beträgt.

12. Wärmeschrumpfbare Umhüllung nach einem der vorhergehenden Ansprüche, **dadurch gekennzeichnet,** daß die Kunststoffmaterialien vorzugsweise enthalten:
a) ein leichtkristallines Polyolefin, zum Beispiel Polyethylen hoher Dichte (HDPE), Polyethylen niederer Dichte (LDPE), lineares Ethylencopolymer (LLDPE, LMDPE) in einem Anteil von 60 - 95%; statt eines einzelnen teilkristallinen Polyolefins kann auch eine Abmischung zum Beispiel verschiedener Polyethylene in beliebiger Zusammensetzung verwendet werden,
b) gegebenenfalls Ethylencopolymere mit Comonomeren polarenen Charakters, zum Beispiel Vinylacetat, Butylacrylat in Anteilen von 5 - 30%,
c) Füllstoffe, insbesondere Ruß in Anteilen von 1 - 25 %. Zusätzlich enthalten diese Polymermassen Alterungsschutzmittel, insbesondere Antioxidantien aus der Gruppe bekannter sterisch gehinderter Phenole und Amine; gegebenenfalls Verarbeitungshilfsmittel und Vernetzungsverstärker in unterschiedlicher Dotierung.

13. Wärmeschrumpfbare Umhüllung nach einem der vorhergehenden Ansprüche, **dadurch gekennzeichnet,** daß die für die mechanischen Featigkeitseigenschaften verantwortliche Schicht aus einer nicht schrumpfbaren Kunststoffkomponente besteht.

14. Wärmeschrumpfbare Umhüllung nach einem der Ansprüche 1 bis 12, **dadurch gekennzeichnet,** daß die für die mechanischen Festigkeitseigenschaften verantwortliche Schicht aus einer ebenfalls schrumpfbaren Kunststoffkomponente besteht.

15. Wärmeschrumpfbare Umhüllung nach einem der vorhergehenden Ansprüche, **dadurch gekennzeichnet,** daß bei mehrschichtigem Aufbau die dazwischenliegende Schicht mit Löchern, Schlitzen oder Durchrissen versehen ist, so daß zwischen den äußeren Schichten ein Durchgriff zur gegenseitigen Haftung gegeben ist.

## Claims

1. Heat-shrinkable covering (SH) of crosslinked plastic material for a sealed termination of articles, at least two polymeric plastic components (KS, KN) being arranged on top of each other over the entire surface of the covering (SH) and having different shrinkabilities from each other, characterized in that the covering (SH) has beads (W) running in the direction of extrusion (ER) and in that one plastic component with optimum shrinkability is arranged between the beads (W) in such a way that the direction of shrinkage (SR) runs perpendicularly with respect to the direction of extrusion (ER), in that the plastic component with optimum resistance to continued tearing, puncture strength, bursting strength and transverse strength is of a planar design, in that the polymeric plastic components (KS, KN) have the same basic conception, in that the plastic components (KS, KN) are provided with differently proportioned crosslinking accelerators and, when coextruded, are subjected to an electron bombardment.

2. Heat-shrinkable covering according to Claim 1, characterized in that the layer with the optimum mechanical strength is designed with differing layer thickness.

3. Heat-shrinkable covering according to Claim 1, characterized in that the plastic materials have, as crosslinking accelerators, preferably triallyl cyanurate, triallyl isocyanurate or ethylene glycol dimethacrylate.

4. Heat-shrinkable covering according to one of the preceding claims, characterized in that regions shrinking to different degrees are formed by a changing geometrical form selection, preferably by differing selection of the material thickness.

5. Heat-shrinkable covering according to Claim 4, characterized in that the covering surface has a profile structure running longitudinally with respect to the direction of shrinkage.

6. Heat-shrinkable covering according to one of the preceding claims, characterized in that plastic components of different degrees of initial crosslinking are arranged as films one on top of the other in a sandwich fashion.

7. Heat-shrinkable covering according to one of the preceding claims, characterized in that the covering is constructed in a combination of a sandwich structure with surface areas having changing shrinkage regions in alternation.

8. Heat-shrinkable covering according to one of the preceding claims, characterized in that additional films, preferably of high-density polyethylene (HDPE) or of low-density polyethylene (LDPE), are applied to the covering and in that, if appropriate, the said additional films are weakly crosslinked.

9. Heat-shrinkable covering according to one of the preceding claims, characterized in that fibres of polymer-compatible materials, preferably glass fibres, are incorporated.

10. Heat-shrinkable covering according to one of the preceding claims, characterized in that a heat-shrinkable expanded polymer film, preferably of polyethylene, is incorporated in the covering.

11. Heat-shrinkable covering according to Claim 10, characterized in that the pores of the expanded polymer film are uniformly distributed and the pore volume amounts to no more than 30 %.

12. Heat-shrinkable covering according to one of the preceding claims, characterized in that the plastic materials preferably contain:
a) a semi-crystalline polyolefin, for example high-density polyethylene (HDPE), low-density polyethylene (LDPE), linear ethylene copolymer (LLDPE, LMDPE) in a proportion of 60 - 95 %; instead of a single semi-crystalline polyolefin, a blend of, for example, different polyethylenes in any desired combination may also be used,
b) if appropriate, ethylene copolymers with comonomers of polar character, for example vinyl acetate, butyl acrylate in proportions of 5 - 30 %,
c) fillers, in particular carbon black, in proportions of 1 - 25 %. In addition, these polymer compounds contain anti-aging agents, in particular antioxidants, from the group of known sterically inhibited phenols and amines; if appropriate, processing aids and crosslinking promoters of differing doping.

13. Heat-shrinkable covering according to one of the preceding claims, characterized in that the layer responsible for the mechanical strength properties comprises a non-shrinkable plastic component.

14. Heat-shrinkable covering according to one of Claims 1 to 12, characterized in that the layer responsible for the mechanical strength properties comprises a likewise shrinkable plastic component.

15. Heat-shrinkable covering according to one of the preceding claims, characterized in that, in the case of multilayered construction, the intervening layer is provided with holes, slots or tears, so that there is an interpenetration between the outer layers for mutual adhesion.

## Revendications

1. Enveloppe (SH) thermorétractable en matière plastique réticulée pour enfermer des objets de manière étanche, au moins deux constituants de matière plastique (KS, KN) polymères étant superposés sur toute la surface de l'enveloppe (SH) et présentant des aptitudes à se rétracter différentes l'un de l'autre,
caractérisée
en ce que l'enveloppe (SH) comporte des bourrelets (W) s'étendant dans la direction d'extrusion (ER) et en ce qu'un constituant de matière plastique ayant une aptitude optimum à se rétracter est disposé entre les bourrelets (W) de manière que la direction de retrait (SR) s'étende perpendiculairement à la direction d'extrusion (ER), en ce que le constituant de matière plastique ayant une résistance optimum à la propagation des fissures au perçage, à l'éclatement et au cisaillement, est constitué de manière à être plan, en ce que les constituants de matière plastique (KS, KN) polymères ont la même conception de base, en ce que les constituants de matière plastique (KS, KN), munis d'accélérateurs de réticulation dosés de manière différente et coextrudés, sont exposés à un faisceau d'électrons.

2. Enveloppe thermorétractable suivant la revendication 1, caractérisée en ce que la couche de résistance mécanique optimum a une épaisseur qui varie.

3. Enveloppe thermorétractable suivant la revendication 1, caractérisée en ce que les matières plastiques comportent, comme accélérateur de réticulation, de préférence du cyanurate de triallyle, de l'isocyanurate de triallyle, du diméthacrylate d'éthylèneglycol.

4. Enveloppe thermorétractable suivant l'une des revendications précédentes, caractérisée en ce que diverses parties à fort retrait sont formées par un choix de formes géométriques différentes et, de préférence, par un choix différent d'épaisseurs de matière.

5. Enveloppe thermorétractable suivant la revendication 4, caractérisée en ce que la surface de l'enveloppe comporte une structure profilée s'étendant le long de la direction de retrait.

6. Enveloppe thermorétractable suivant l'une des revendications précédentes, caractérisée en ce que des constituants de matière plastique de degrés de réticulation initiaux différents sont disposés sous forme de feuilles en stratifié les uns au-dessus des autres.

7. Enveloppe thermorétractable suivant l'une des revendications précédentes, caractérisée en ce que l'enveloppe est constituée à la manière d'un stratifié en ayant des surfaces de parties se rétrécissant de manière alternée.

8. Enveloppe thermorétractable suivant l'une des revendications précédentes, caractérisée en ce que des feuilles supplémentaires de préférence en polyéthylène haute densité (HDPE) ou en polyéthylène basse densité (LDPE) sont déposées sur l'enveloppe et que celles-ci sont éventuellement faiblement réticulées.

9. Enveloppe thermorétractable suivant l'une des revendications précédentes, caractérisée en ce que des fibres en matière compatible avec un polymère, de préférence des fibres de verre, sont insérées.

10. Enveloppe thermorétractable suivant l'une des revendications précédentes, caractérisée en ce qu'une feuille en mousse de polymère rétractable, de préférence en polyéthylène est insérée dans l'enveloppe.

11. Enveloppe thermorétractable suivant la revendication 10, caractérisée en ce que les pores de la feuille en mousse de polymère sont réparties uniformément et le volume de pores n'est pas supérieur à 30 %.

12. Enveloppe thermorétractable suivant l'une des revendications précédentes, caractérisée en ce que les matières plastiques renferment de préférence :
a) une polyoléfine faiblement cristalline, par exemple du polyéthylène de haute densité (HDPE), du polyéthylène de basse densité (LDPE), un copolymère d'éthylène linéaire (LLDPE, LMDPE) en une proportion de 60 à 95 %; au lieu d'une polyoléfine partiellement cristalline unique, on peut utiliser également un mélange, par exemple de divers polyéthylènes en n'importe quelle composition,
b) le cas échéant, des copolymères d'éthylène et de monomères de caractère polaire, par exemple d'acétate de vinyle, d'acrylate de vinyle, en des proportions de 5 à 30 %,
c) une charge, notamment de la suie, en des proportions de 1 à 25 %. En plus, ces compositions de polymères renferment des agents de protection vis-à-vis du vieillissement, notamment des antioxydants appartenant au groupe connu des phénols à empêchement stérique et des amines; le cas échéant, des adjuvants de transformation et des intensificateurs de réticulation en des dopages différents.

13. Enveloppe thermorétractable suivant l'une des revendications précédentes, caractérisée en ce que la couche responsable des propriétés de résistance mécanique est en un constituant en matière plastique non rétractable.

14. Enveloppe thermorétractable suivant l'une des revendications 1 à 12, caractérisée en ce que la couche responsable des propriétés de résistance mécanique est en un constituant de matière plastique également rétractable.

15. Enveloppe thermorétractable suivant l'une des revendications précédentes, caractérisée en ce que dans une structure stratifiée, la couche intermédiaire est munie de trous, de fentes ou de ruptures, de manière qu'un accès soit donné aux couches extérieures pour un collage mutuel.
